## Europäisches Patentamt
## European Patent Office
## Office européen des brevets

(19)

(11) Numéro de publication: **0 100 725**
**B1**

(12)

# FASCICULE DE BREVET EUROPEEN

(45) Date de publication du fascicule du brevet: **23.01.91**

(51) Int. Cl.⁵: **F 02 M 53/02**, F 02 M 31/16

(21) Numéro de dépôt: **83401540.6**

(22) Date de dépôt: **27.07.83**

(54) **Procédé d'alimentation de moteur à combustion interne et moteur faisant application de ce procédé.**

(30) Priorité: **27.07.82 FR 8213066**

(43) Date de publication de la demande:
**15.02.84 Bulletin 84/07**

(45) Mention de la délivrance du brevet:
**23.01.91 Bulletin 91/04**

(84) Etats contractants désignés:
**AT BE CH DE GB IT LI LU NL SE**

(56) Documents cités:
**DE-A-2 825 367**
**DE-A-3 018 634**
**US-A-2 858 811**
**US-A-3 933 135**

(73) Titulaire: **SCOMA - ENERGIE, Sarl dite:**
**11-13 Rue Forest**
**F-75018 Paris (FR)**

(72) Inventeur: **Redele, Jean Emile Amédée**
**11-13 rue Forest**
**F-75018 Paris (FR)**

(74) Mandataire: **Pinguet, André**
**Cabinet de Proprieté Industrielle CAPRI 28 bis,**
**avenue Mozart**
**F-75016 Paris (FR)**

Courier Press, Leamington Spa, England.

## Description

La présente invention a pour objet un procédé d'alimentation de moteur Diesel.

On a déjà proposé de réchauffer le gazole en vue surtout de faciliter le démarrage à froid des moteurs, de réduire les émanations (fumées blanches au démarrage), en éliminant les phénomènes de cristallisation des produits paraffinés (pailletage et oxydes d'azote) et, éventullement, d'économiser du carburant. Pour des raisons pratiques évidentes, le gazole a toujours été réchauffé avant son introduction dans la pompe d'injection. La température généralement souhaitée est de l'ordre de 40°C (105°F). Les différents procédés et dispositifs décrits sur ce sujet indiquent que les moyens de réchauffage du gazole sont mis hors circuit quand le gazole arrivant à la pompe d'injection atteint ou.dépasse une température de l'ordre indiqué ci-dessus. La plupart des systèmes de réchauffage utilisent soit une résistance électrique, qui est débranchée lorsque la température souhaitée est atteinte, soit l'eau du radiateur dont la température, en tous cas, ne doit jamais dépasser sensiblement 80°C. Le réchauffage n'a donc pu en pratique dépasser cette valeur. Certaines littératures indiquent qu'un réchauffage excessif présente des inconvénients et doit être évité (voir B US 3 913 543). Si certains auteurs indiquent que le réchauffage du gazole permet d'améliorer la consommation sur route des véhicules, des essais ont montré que c'était au détriment d'autres performances et que les consommations spécifiques au cheval×heure restaient sensiblement inchangées.

Or conformément à la présente invention, on a trouvé qu'il était possible de réaliser des économies de carburant importantes en utilisant un procédé d'alimentation en gazoil d'un moteur diesel que a été conçu pour fonctionner normalément avec du gazoil à une température usuelle d'emploi délivré au moteur à l'aide d'une pompe d'alimentation standard conçue pour ladite température, dans lequel

—on chauffe d'abord le gazoil à injecter à une température sensiblement constante choisie entre environ 70 et 120°C;

—on pompe ensuite le gazoil chauffé à l'aide d'une pompe d'alimentation ayant un taux d'introduction volumétrique supérieur à celui de cette pompe d'alimentation standard de façon à maintenir un taux d'introduction massique dudit gazoil pendant le pompage identique à celui de la pompe d'alimentation standard et compenser ainsi la dilatation thermique du gazoil résultant du chauffage, ledit taux d'introduction massique étant défini comme la masse de gazoil introduite dans le cylindre dudit moteur diesel pour chaque degre de rotation du vilebrequin dudit moteur diesel;

—on injecte le gazoil chauffé dans une chambre de combustion du moteur diesel; et

—ledit chauffage, pompage et maintient du taux sont effectues en régime permanent dudit moteur diesel.

On peut utiliser l'huile de lubrification du moteur pour réchauffer le carburant. La température de l'huile peut s'élever sans inconvenient sensiblement au-dessus de celle de l'eau de réfroidissement et même dépasser 100°C. Le réchauffage du carburant avec l'huile permet d'obtenir des températures supérieures à celles que l'on obtient avec l'eau de refroidissement et c'est plus facile à mettre en oeuvre et à contrôler que le réchauffage avec les gaz d'echappement.

Le réchauffage du gazole provoque deux premières conséquences immédiates: il subit une dilatation thermique et sa fluidité augmente. Par suite, pour un volume donné de gazole introduit dans un cylindre, le pouvoir calorifique total décroit avec l'augmentation de la température du carburant. En outre, les fuites dans la pompe augmentent. Les fuites de gazole dans la pompe sont généralement recherchées et optimisées pour assurer la lubrification. On comprend qui si la fluidité change, l'importance des fuites va changer.

C'est pourquoi, jusqu'à maintenant, on avait toujours limité volontairement le réchauffage du gazole, en constatant qu'aux températures supérieures, le rendement diminuait. La demanderesse ayant constaté au cours d'essais que la pression sur les pistons diminuant, quand un élève la température de réchauffement du gazole, elle a eu l'idée de modifier le taux d'introduction du gazole dans le moteur en vue de rétablir la pression sur le piston, en maintennat le débit massique.

Les avantages et les caractéristiques de l'invention vont être expliqués en détail, à l'aide de la description ci-après donnée en regard des dessins ci-joints, représentant différents graphiques donnant, en fonction de la vitesse d'un moteur, en t/m:

—figure 1, la consommation en grammes par cheval×heure;

—figure 2, la puissance en CV;

—figure 3, le débit pompe en mm³/coup;

—figure 4, le couple moteur en mêtre décaNewton; et,

—figure 5, la pression maxima en bar dans le cylindre.

On a effectué des essais et pris des mesures sur un moteur Diesel R V I (Renault Véhicules Industriels) de six cylindres cylindré 11,4 l (6×1,9) à turbo-compresseur suralimenté à injection directe, puissance maxi 300 CV. Les puissances ont été mesurées sur un frein hydraulique Schenck de 600 CV. Le gazole a été réchauffé en amont de la pompe d'injection. Celle-ci a six cylindres en ligne, le diamètre du piston sur la pompe standard est de 12 mm et il est de 13 mm sur la pompe modifiée pour le gazole réchauffé. Les joints d'étanchéité ont été changés.

Les courbes I à V sont relatives au fonctionnement standard, et les courbes I' à V' au fonctionnement selon l'invention.

Le tableau ci-dessous indique les températures de l'eau de refroidissement, de l'huile et du gazole à

2

EP 0 100 725 B1

l'injecteur pour les conditions standards et le fonctionnement modifié en fonction de la vitesse de rotation du moteur en t/m.

| t/m | Standard | | | Modifié | | |
|---|---|---|---|---|---|---|
| | θ eau | θ huile | θ gazole | θ eau | θ huile | θ gazole |
| 1300 | 90 | 70 | 36 | 88 | 93 | 72 |
| 1500 | 90 | 82 | 36 | 89 | 100 | 75 |
| 1800 | 87 | 80 | 36 | 82 | 97 | 72 |
| 2000 | 86 | 72 | 37 | 87 | 101 | 76 |
| 2200 | 86 | 75 | 38 | 87 | 105 | 77 |

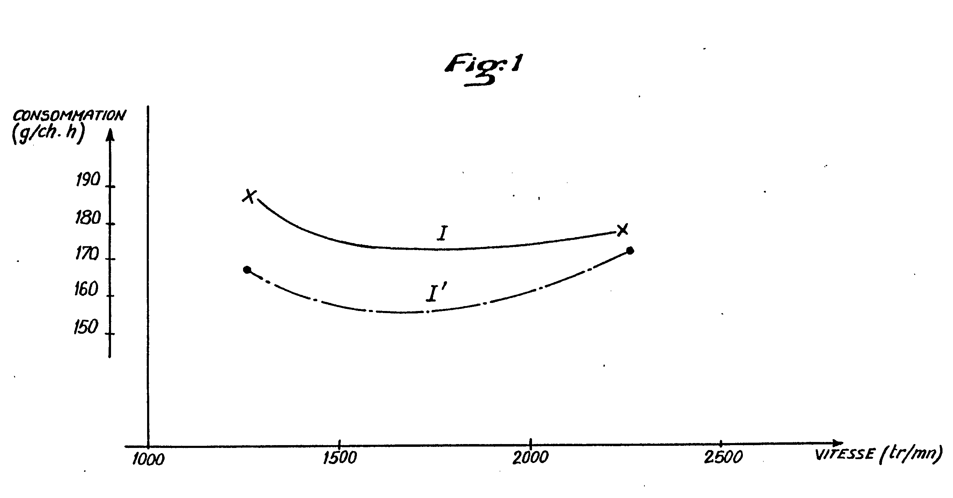

Sur la figure 1, on note que la consommation exprimée en grammes/cheval×heure est inférieure de 5 à 10% sur toute la plage de vitesses, de 1250 à 2250 t/m, ceci pour un réchauffage qui reste compris entre 72 et 77°C.

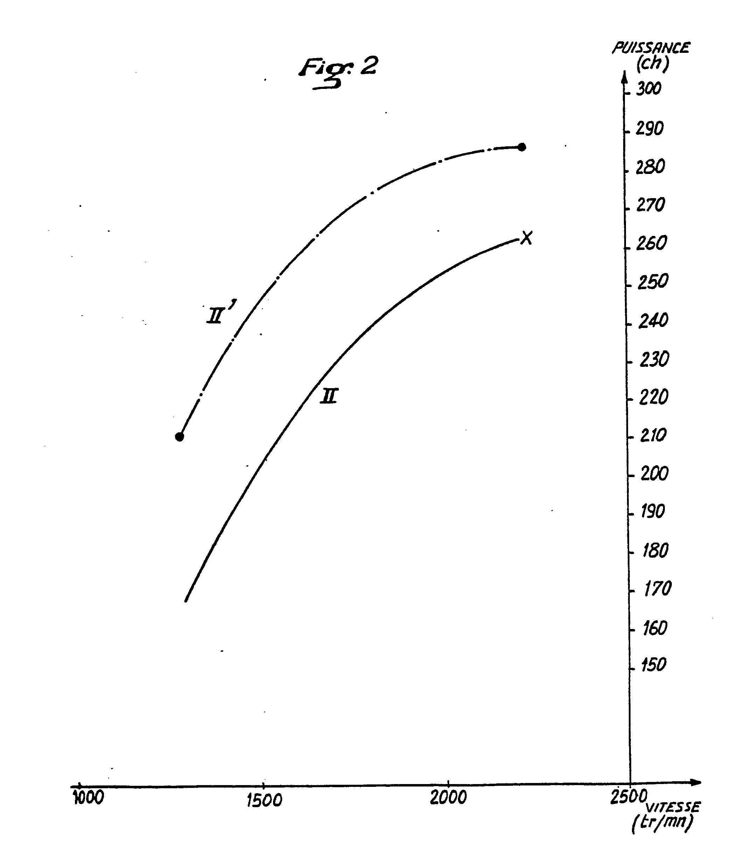

Les courbes de la figure 2 montrent le gain de puissance.

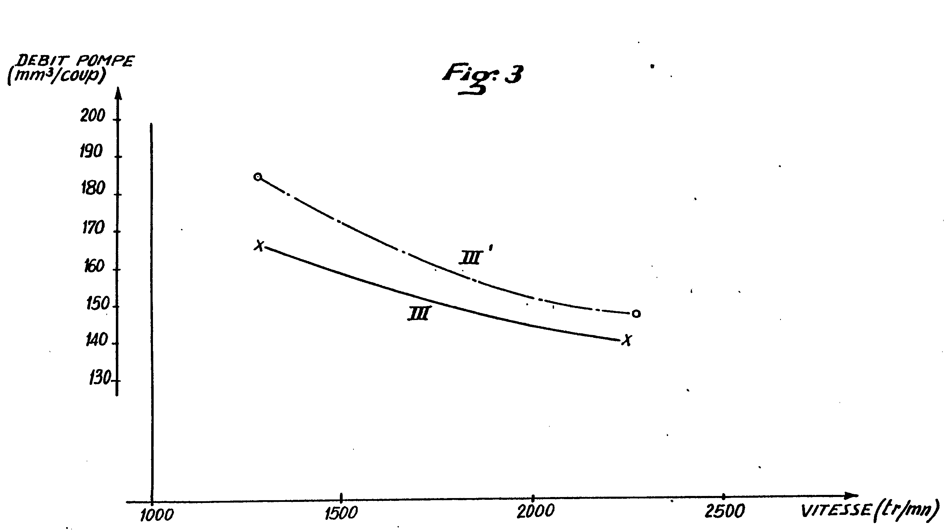

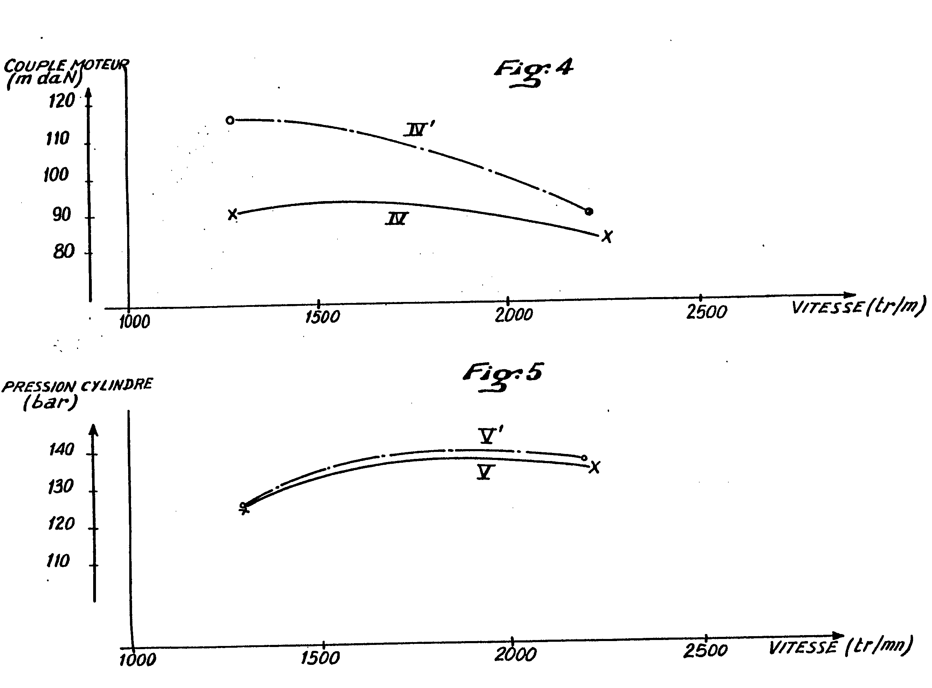

Les courbes de la figure 3 montrent l'accroissement du débit de la pompe d'injection (en $mm^3$ par coup). L'accroissement du couple moteur, en mètre×déca Newton est visible sur la figure 4. Les courbes de la figure 5 donnent la pression maxima dans le cylindre.

Un fait essentiel pour la mise en oeuvre du procédé selon la présente invention est l'accroissement du débit pompe en $mm^3$/coup. Non seulement on obtient une réduction de la consommation pour une même puissance fournie, mais les autres caractéristiques sont aussi améliorées: on peut obtenir plus de puissance du moteur et un couple plus élevé. A 80°C, la dilatation du gazole est d'environ 4%. Il est facile de la mesurer pour une autre température choisie pour le fonctionnement et d'adapter ou de concevoir la pompe d'injection de façon à assurer le débit masse correct.

Le rendement du moteur peut encore être amélioré, conformément à l'invention, en utilisant des trous d'injecteurs plus fins, donnant une meilleure pulvérisation et, par suite, une combustion plus rapide et plus complète, ce qui est rendu possible par la plus grande fluidité (moindre viscosité) du gazole réchauffé. Le réchauffage du gazole produit déjà des effets remarquables à des températures de l'ordre de 72 à 77°C, comme cela ressort des essais rapportés ci-dessus, par rapport aux températures du gazole déjà porté à 35—40°C. On peut s'attendre à des résultats encore plus favorables à des températures comprises entre 80 et 120°C, pourvu d'adapter le cas échéant la pompe à la dilatation du gazole en fonction de la température prévue pour le régime permanent. Compte tenu de l'accroissement de fluidité du gazole à ces températures, il peut être aussi nécessaire de renforcer l'étanchéité des joints de la pompe d'injection.

La demanderesse a pensé que l'amélioration du rendement pouvait provenir du fait que l'inflammation du gazole se produit plus vite et que la combustion est plus complète. L'explosion et l'accroissement brutal de la pression qui en résulte se produit plus tôt et plus vite. Ceci accroît la surface exprimant le travail (P×V) dans le cycle de carnot. Ceci a une importance considérable sur le rendement. En outre, la combustion étant plus complète, les émanations sont réduites. Lors de l'injection du gazole dans la chambre, comme le gazole est à température plus élevée, il refroidit moins l'air comprimé dans lequel il est pulvérisé. Le gain est encore plus important si l'on compare le présent procédé à l'injection usuelle d'un gazole non porté à 35—40°C.

Enfin, comme cela apparaît sur la figure 2, on constate qu'avec le procédé selon l'invention, on obtient la même puissance pour une vitesse de rotation du moteur beaucoup plus basse. Dans l'exemple indique, le moteur classique développe 260 CV pour une vitesse de rotation qui est environ 220 tr/mn alors que la même puissance est obtenue avec le moteur modifié selon l'invention pour une vitesse d'environ 1500 tr/mn. On sait que la puissance consommée par les frottements internes du moteur est très importante et que ces frottements sont proportionnels au carré de la vitesse. On obtient donc conformément à la présente invention une économie importante de consommation, qui résulte de la réduction d'énergie consommée par les frottements internes, en raison de la vitesse de rotation beaucoup plus faible pour la même puissance disponible. Or, pour un moteur donné, on ne cherche pas en général une augmentation de puissance, car celle-ci est limitée par la structure du moteur, qui ne peut pas supporter une pression interne plus élevée. On cherche bien plus à obtenir la même puissance. Ceci est obtenu à une vitesse plus réduite, d'où il résulte une économie d'énergie très importante.

**Revendication**

Procédé d'alimentation en gazoil d'un moteur diesel qui a été conçu pour fonctionner normalement avec du gazoil a une température usuelle d'emploi délivré au moteur à l'aide d'une pompe d'alimentation standard conçue pour ladite température, dans lequel:

3

—on chauffe d'abord le gazoil à injecter a une température sensiblement constante choisie entre environ 70 et 120°C;

—on pompe ensuite le gazoil chauffé à l'aide d'une pompe d'alimentation ayant un taux d'introduction volumetrique supérieur à celui de cette pompe d'alimentation standard de façon à maintenir un taux d'introduction massique dudit gazoil pendant le pompage identique a celui de la pompe d'alimentation standard et compenser ainsi la dilatation thermique du gazoil résultant du chauffage, ledit taux d'introduction massique étant défini comme la masse de gazoil introduite dans le cylindre dudit moteur diesel pour chaque degre de rotation du vilebrequin dudit moteur diesel;

—on injecte le gazoil chauffé dans une chambre de combustion du moteur diesel; et

—ledit chauffage, pompage et maintient du taux sont effectues en régime permanent dudit moteur diesel.

**Patentanspruch**

Verfahren zur Versorgung einer Brennkraftmaschine mit Diselkraftstoff, die normalerweise mit Dieselkraftstoff bei gewöhnlicher Anwendungstemperatur und über eine Standardkraftstoffpumpe versorgt wird, die für die besagte Temperatur ausgelegt ist, in der

—der einzuspritzende Dieselkraftstoff zuerst auf eine weitgehend konstante Temperatur zwischen 70°C und 120°C erwärmt wird,

—anschließend der so erwärmte Dieselkraftstoff über eine Kraftstoffpumpe eingepumpt wird, deren Volumpumpleistung über der einer normalen Kraftstoffpumpe liegt, sodaß beim Pumpen eine Massenpumpleistung des Dieselkraftstoffs aufrechthalten wird, die über der einer Standardkraftstoffpumpe liegt und somit die Ausdehnung des Dieselkraftstoffs aufgrund der Erwärmung ausgeglichen wird, wobei die Massenpumpleistung als diejenige Masse Dieselkraftstoff definiert wird, die in den Zylinder des besagten Dieselmotors pro Drehungsgrad der Kurbelwelle des Dieselmotors eingespritzt wird;

—der erwärmte Dieselkraftstoff in die Verbrennungskammer des Dieselmotors eingespritzt wird und

—die Erwärmung, das Pumpen und die Aufrechtfraltung der Massenpumpleistung bei Dauerbetrieb des Dieselmotors durchgeführt werden.

**Claim**

A method of supplying diesel oil to a diesel engine, designed to operate normally with diesel oil at a usual operating temperature, said diesel oil being delivered to the engine by means of a standard feed pump designed for said temperature, wherein:

—the diesel oil to be injected is first heated to a substantially constant temperature selected between about 70 and 120°C;

—the heated diesel oil is then pumped by means of a feed pump having a higher volumetric flow rate than a standard feed pump so as to maintain a mass flow rate of said diesel oil during the pumping identical with that of said standard feed pump and thus compensate for the thermal expansion of the diesel oil resulting from the heating, said mass flow rate being defined as the mass of diesel oil introduced in the cylinder of said diesel engine for each degree of rotation of the crankshaft of said diesel engine;

—the heated diesel oil is injected in a combustion chamber of said diesel engine; and

—said heating, pumping and maintaining of the rate are operative in the normal running of said diesel engine.

EP 0 100 725 B1

Fig.1

CONSOMMATION
(g/ch.h)

190
180
170
160
150

I

I'

1000        1500        2000        2500        VITESSE (tr/mn)

Fig. 2

PUISSANCE (ch)

VITESSE (tr/mn)

Fig. 3

DEBIT POMPE
(mm³/coup)

VITESSE (tr/mn)

EP 0 100 725 B1

*Fig. 4*

COUPLE MOTEUR
(m daN)

IV'

IV

VITESSE (tr/m)

*Fig. 5*

PRESSION CYLINDRE
(bar)

V'

V

VITESSE (tr/mn)

EP 0 100 725 B1